# EUROPEAN PATENT APPLICATION

(11) **EP 4 223 580 A1**
(43) Date of publication of application: **09.08.2023**
(21) Application number: 22806663.5
(22) Date of filing: 07.05.2022
(51) Int. Cl.: B60L 53/14, B60L 53/16, B60L 53/18

(54) **PORTABLE CHARGER FOR ELECTRIC VEHICLE**

(30) Priority: 11.05.2021 CN 202110510676
(71) Applicant: ZHEJIANG EV-TECH CO., LTD., Huzhou, Zhejiang 310012 (CN)
(72) Inventor: HAO, Shiqiang, Huzhou, Zhejiang 310012 (CN); PING, Dinggang, Huzhou, Zhejiang 310012 (CN)
(74) Representative: dompatent von Kreisler Selting Werner - Partnerschaft von Patent- und Rechtsanwälten mbB
(86) International application number: PCT/CN2022/091563
(87) International publication number: WO 2022/237697

(57) **Abstract**

The present invention provides a portable electric vehicle charger, including a charging control box, a charging gun head, and a cable. The charging control box is provided with a first power conversion circuit that is electrically connected to a grid-side controller, controlled by the grid-side controller and configured to convert and control an alternating-current voltage from the grid. The charging gun head is provided with a second power conversion circuit that is controlled by a battery-side controller and configured to output a DC voltage or current matched with a battery voltage of an electric vehicle. The present invention may directly charge a power battery of the electric vehicle without an on-board charger or a charging pile, has small size, light weight, and low heat emission, and may provide backup power for electrical equipment by using a bidirectional power conversion function.

## Description

This patent application claims the priority of Chinese Patent Application No. 202110510676.5, entitled "A Portable Electric Vehicle Charger" filed in China Patent Office on May 11, 2021, the entire disclosure of which is incorporated in the present application by reference.

### TECHNICAL FIELD

The present invention relates to the technical field of electric vehicle chargers, in particular to a portable electric vehicle charger.

### BACKGROUND

With reference to a method and an apparatus for regulating an output voltage of an on-board charger, and an electric vehicle, with Chinese patent publication No. CN107565644A, the method includes the following steps: determining a calibrated output voltage of an on-board charger according to a current voltage of a battery to be charged; obtaining an actual output voltage of the on-board charger; determining a voltage regulation mode of the on-board charger according to a voltage deviation between the calibrated output voltage and the actual output voltage of the on-board charger; and regulating the actual output voltage of the on-board charger in the determined voltage regulation mode, where the voltage regulation mode is switching frequency regulation or pulse width regulation. The on-board charger (OBC) of the new energy electric vehicle converts the grid voltage into a DC voltage matched with the power battery of the vehicle, and provides different levels of charging power for the power battery. However, because the on-board charger has long development cycle, high failure rate, and higher requirements for components, the cost and failure rate of the electric vehicle are increased. If charging equipment is moved outside the vehicle and carried with the vehicle, the requirements for type selection of the components of the charger as well as the cost and failure rate of the vehicle may be reduced. Therefore, a portable vehicle charger is one of development trends of charging equipment for new energy vehicles in the future.

### SUMMARY

The present invention solves the problem that an on-board charger increases the cost and failure rate of an electric vehicle, and proposes a portable electric vehicle charger, which may directly charge a power battery of the electric vehicle without the on-board charger or a charging pile, has small size, light weight, and low heat emission, and may provide backup power for electrical equipment by using a bidirectional power conversion function.

To achieve the above objective, there is proposed the following technical solution:
A portable electric vehicle charger, including:
a charging control box, where a first port connected to the grid and a second port connected to a charging gun head are arranged on the outer surface of the charging control box, an EMC filter connected to the first port is arranged inside the charging control box, the EMC filter is connected to a first power conversion circuit, and the first power conversion circuit is electrically connected to a grid-side controller, controlled by the grid-side controller, and configured to convert and control an alternating-current voltage from the grid;
a charging gun head, where a third port connected to the charging control box and a fourth port for supplying DC power connected to an electric vehicle are arranged on an outer surface of the charging gun head, a second power conversion circuit connected to the third port and an insulation detection circuit connected to the second power conversion circuit are arranged inside the charging gun head, the second power conversion circuit and the insulation detection circuit are electrically connected to a battery-side controller, and the second power conversion circuit is controlled by the battery-side controller and configured to output a DC voltage or current matched with a battery voltage of the electric vehicle; and
a cable, configured to connect the second port and the third port, where the cable internally contains a power connecting line configured to connect the first power conversion circuit and the second power conversion circuit, and a signal connecting line configured for communication between the grid-side controller and the battery-side controller.

The first power conversion circuit and the second power conversion circuit include a plurality of switches, respectively. When the charger performs charging, the first power conversion circuit according to the present invention implements an alternating current to direct current function, that is, an AC/DC function, and the second power conversion circuit according to the present invention implements an isolated DC/DC function, that is, a direct current conversion function, so that the DC voltage obtained by conversion is matched with a charging voltage of the electric vehicle. When the charger performs discharging, the second power conversion circuit according to the present invention implements an isolated AC/DC function, that is, it converts a direct current of an energy storage battery of the electric vehicle into an alternating current to be output to the first power conversion circuit, and the first power conversion circuit implements the AC/AC function, that is, it converts the alternating current input from the second power conversion circuit into an alternating current suitable for electrical equipment. The first power conversion circuit and the second power conversion circuit implement bidirectional flow of energy, convert the energy stored in a power battery of the electric vehicle into the alternating-current voltage capable of matching with an electrical load, and provide the alternating-current voltage to external electrical equipment via a standard power supply plug integrated outside the charging control box.

Power electronic conversion apparatuses and corresponding control circuits are together integrated inside the charger. Compared to conventional charging equipment, the portable electric vehicle charger may directly charge the power battery of the electric vehicle without the on-board charger or the charging pile; the portable electric vehicle charger has small size, light weight, high efficiency, and low heat emission, thereby reducing equipment size and cost and being convenient to carry; and the portable electric vehicle charger may have a bidirectional electric energy conversion function to provide backup power for the electrical equipment.

As a preference, a soft start circuit is arranged inside the charging control box and connected between the EMC filter and the first power conversion circuit, and a main power switch is arranged inside the charging gun head, connected between the second power conversion circuit and the fourth port, and electrically connected to the battery-side controller.

As a preference, a leakage current and insulation detection circuit is arranged inside the charging control box, connected between the soft start circuit and the first power conversion circuit, and electrically connected to the grid-side controller. In the present invention, the leakage current and insulation detection circuit and the insulation detection circuit are arranged to monitor the working process of the charger, and a prompt is given when the charger has a leakage current, so as to cut off the working circuit of the charger, thereby improving the power-consuming safety of the charger.

As a preference, the charging control box externally contains control keys configured to control start, charging stop, and discharging stop of the charger. The control keys according to the present invention are arranged outside the charging control box, and are provided with clear identifiers convenient for a user to select functions of the charger.

As a preference, the first port of the charging control box is connected to a standard plug via the cable, and the standard plug is configured to be connected to a standard socket for supplying power to the charger.

As a preference, the first port of the charging control box is connected to a standard plug that is configured to be connected to a standard socket for supplying power to the charger.

A portable electric vehicle charger, including:
a charging gun head, where a fifth port connected to a power plug and a DC power supply port connected to an electric vehicle are arranged on the outer surface of the charging gun head, an EMC filter, a soft start circuit, a first power conversion circuit, a second power conversion circuit, and a main power switch connected in sequence are arranged inside the charging gun head, the fifth port is connected to the EMC filter, the main power switch is connected to the DC power supply port connected to the electric vehicle, the soft start circuit and the first power conversion circuit are electrically connected to a grid-side controller, the second power conversion circuit and the main power switch are electrically connected to a battery-side controller, and the grid-side controller is in communication connection with the battery-side controller;
a cable, configured to connect the power plug and the fifth port, and internally contains a power connecting line; and
the power plug, configured to be connected to a standard socket connected to the grid.

In the present invention, a power conversion apparatus is integrated in the inner space of a charging gun, and a circuit originally located outside the charging gun is moved into the charging gun, so that the inner space of the charging gun is fully utilized, the cost and size are reduced, and the charger is easy to carry.

As a preference, the power plug is a male and female conversion plug; when the charger performs forward charging, the male and female conversion plug is converted into a male plug to be connected to the standard socket connected to the grid to provide an alternating-current voltage; and when the charger performs backward discharging, the male and female conversion plug is converted into a female socket to be connected to a power supply plug of external alternating-current electrical equipment.

As a preference, a leakage current and insulation detection circuit and an insulation detection circuit are arranged inside the charging gun head, the leakage current and insulation detection circuit is connected between the soft start circuit and the first power conversion circuit, the insulation detection circuit is connected to the main power switch, the leakage current and insulation detection circuit is electrically connected to the grid-side controller, and the insulation detection circuit is electrically connected to the battery-side controller.

As a preference, the charging gun head externally contains control keys configured to control start, charging stop, and discharging stop of the charger.

The present disclosure has the following beneficial effects: the power electronic conversion apparatuses and the corresponding control circuits are together integrated inside the charger. Compared to the conventional charging equipment, the portable electric vehicle charger may directly charge the power battery of the electric vehicle without the on-board charger or the charging pile; the portable electric vehicle charger has small size, light weight, high efficiency, and low heat emission, thereby reducing the equipment size and cost and being convenient to carry; and the portable electric vehicle charger may have the bidirectional electric energy conversion function to provide the backup power for the electrical equipment.

### BRIEF DESCRIPTION OF THE DRAWINGS

- FIG. 1: is an overall structure diagram of an embodiment 1;
- FIG. 2: is a circuit configuration diagram of the embodiment 1;
- FIG. 3: is an overall structure diagram of an embodiment 3; and
- FIG. 4: is a circuit configuration diagram of the embodiment 3.

### DETAILED DESCRIPTION OF THE EMBODIMENTS

### Embodiment 1:

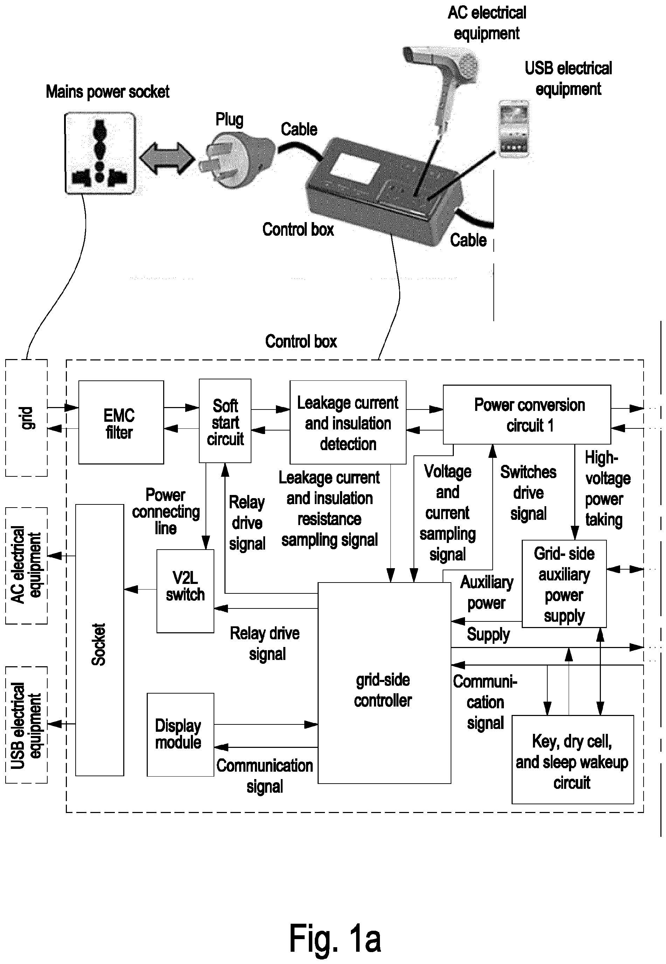

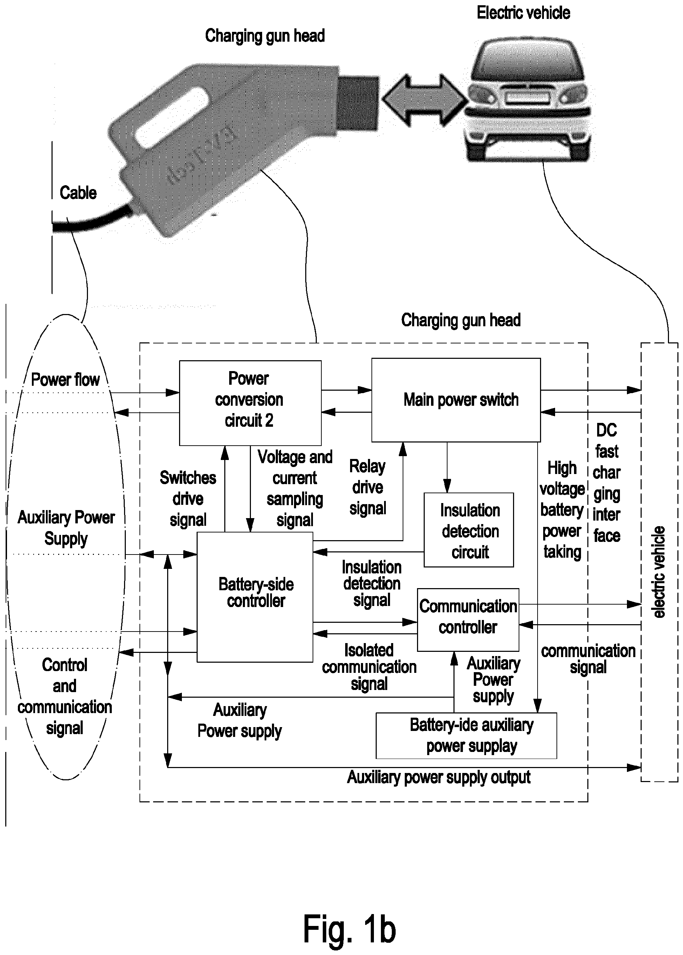

Referring to FIG. 1, this embodiment discloses a portable electric vehicle charger, including:
a charging control box, where a first port connected to the grid and a second port connected to a charging gun head are arranged on the outer surface of the charging control box, an electromagnetic compatibility (EMC) filter connected to the first port is arranged inside the charging control box, the EMC filter is connected to a first power conversion circuit, and the first power conversion circuit is electrically connected to a grid-side controller, controlled by the grid-side controller, and configured to convert and control an alternating-current voltage from the grid;
a charging gun head, where a third port connected to the charging control box and a fourth port for supplying DC power connected to an electric vehicle are arranged on the outer surface of the charging gun head, a second power conversion circuit connected to the third port and an insulation detection circuit connected to the second power conversion circuit are arranged inside the charging gun head, the second power conversion circuit and the insulation detection circuit are electrically connected to a battery-side controller, and the second power conversion circuit is controlled by the battery-side controller and configured to output a DC voltage or current matched with a battery voltage of the electric vehicle; and
a cable, configured to connect the second port and the third port, where the cable internally contains a power connecting line configured to connect the first power conversion circuit and the second power conversion circuit, and a signal connecting line for communication between the grid-side controller and the battery-side controller. The first port of the charging control box is connected to a standard plug via the cable, and the standard plug is configured to be connected to a standard socket for supplying power to the charger.

A soft start circuit and a power factor correction (PFC) inductor are arranged inside the charging control box and sequentially connected between the EMC filter and the first power conversion circuit, and a main power switch is arranged inside the charging gun head, connected between the second power conversion circuit and the fourth port, and electrically connected to the battery-side controller. A leakage current and insulation detection circuit is arranged inside the charging control box, connected between the soft start circuit and the first power conversion circuit, and electrically connected to the grid-side controller. The charging control box externally contains control keys configured to control start, charging stop, and discharging stop of the charger. The control keys according to the present invention are arranged outside the charging control box, and are provided with clear identifiers convenient for a user to select functions of the charger.

The grid-side controller is further connected to a grid-side auxiliary power supply and a key, dry battery and sleep wake-up circuit. The first power conversion circuit can take high-voltage power to the grid-side auxiliary power supply. The grid-side auxiliary power supply supplies power to the key, dry battery and sleep wake-up circuit and the grid-side controller. The charging gun head further includes a battery-side auxiliary power supply and a communication controller. The communication controller is electrically connected to the battery-side controller and configured to communicate with the electric vehicle. The battery-side auxiliary power supply supplies power to the communication controller. And the battery-side auxiliary power supply takes power from a high-voltage battery of the electric vehicle through the main power switch for charging.

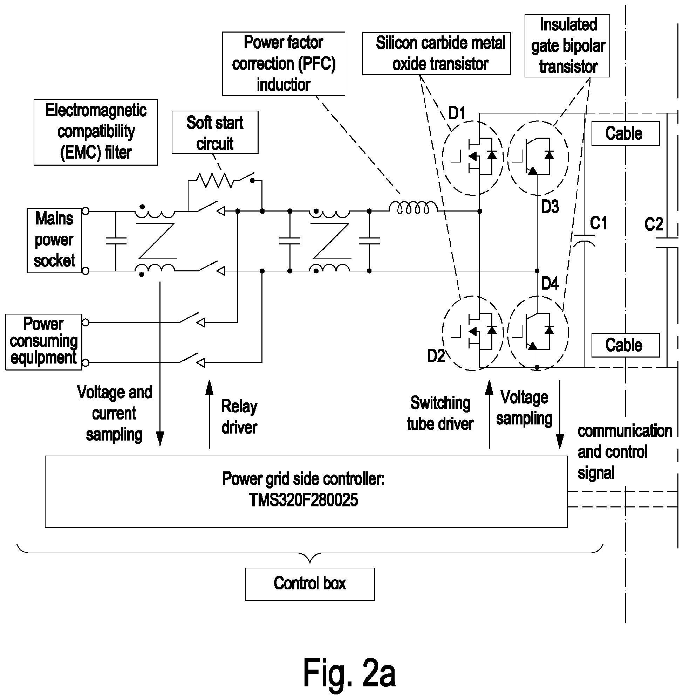

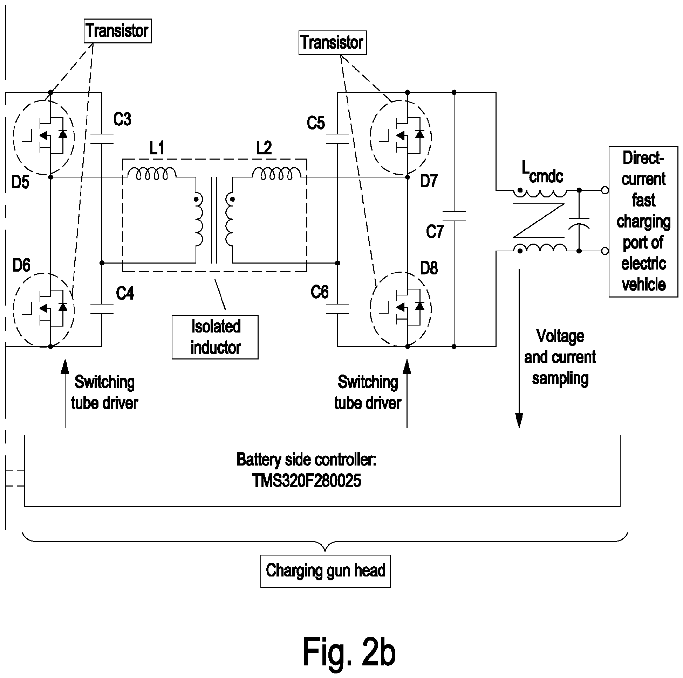

Specific circuit connection in this embodiment refers to FIG. 2. The model number of the grid-side controller is TMS320F280025. The model number of the battery-side controller is TMS320F280025. The first power conversion circuit includes two silicon carbide metal oxide transistors (SiC MOSs), the model number of which is C3M0120065K, two insulated gate bipolar transistors (IGBTs), the model number of which is GRW60TS65EHR, and one aluminum (AL) electrolytic capacitor, the model number of which is 450V 120uF 8pcs. The second power conversion circuit includes four transistors, the model number of which is IPW65R041CFD7, and one isolated inductor. One terminal of the PFC inductor is connected to the source of a silicon carbide metal oxide transistor D1 and the drain of a silicon carbide metal oxide transistor D2, the drain of the silicon carbide metal oxide transistor D1, the collector of an insulated gate bipolar transistor D3, and one terminal of an AL electrolytic capacitor C1 are connected together, and connected to the drain of a transistor D5 via cables, the source of the silicon carbide metal oxide transistor D2, the emitter of an insulated gate bipolar transistor D4, and the other terminal of the AL electrolytic capacitor C1 are connected together, and connected to the source of a transistor D6 via cables, and when the charger performs charging or discharging, the emitter of the insulated gate bipolar transistor D3 and the collector of the insulated gate bipolar transistor D4 are connected together to serve as an input or output terminal of the first power conversion circuit. The model number of all of the relays in FIG. 2 is HF105F-1/012D-1ZSTF. The EMC filter includes a filter inductor, the model number of which is T21-1.5mH and a filter capacitor, the model number of which is 305Vac 2.2uF. Capacitor C3, capacitor C4, capacitor C5, and capacitor C6 are resonant capacitors, the model number of which is 1000V 200nF. Capacitor C7 is a film capacitor, the model number of which is 600V 18uF. The capacitor C7 is connected in parallel to the filter inductor Lcmdc, the model number of which is T21-1.5mH, and the filter inductor Lcmdc is connected to an AL electrolytic capacitor, the model number of which is 500V 100uF.

The source of the transistor D5 and the drain of the transistor D6 are connected together, and connected to one terminal of an inductor L 1, the other terminal of the inductor L1 is connected to one terminal of one side of the isolated inductor, the other terminal of one side of the isolated inductor is connected to one terminal of the capacitor C4 and one terminal of the capacitor C3, the other end of the capacitor C3 is connected to the drain of the transistor D5, the other terminal of the capacitor C4 is connected to the source of the transistor D6, one terminal of the other side of the isolated inductor is connected to one terminal of an inductor L2, the other terminal of the inductor L2 is connected to the source of a transistor D7 and the drain of a transistor D8, the other terminal of the other side of the isolated inductor is connected to one terminal of the capacitor C5 and one terminal of the capacitor C6, the other terminal of the capacitor C5 is connected to the drain of the transistor D7, the other terminal of the capacitor C6 is connected to the source of the transistor D8, and when the charger performs charging or discharging, the drain of the transistor D7 serves as one output or input terminal of the second power conversion circuit, and the source of the transistor D8 serves as the other output or input terminal of the second power conversion circuit. The capacitor C2 is connected between the drain of the transistor D5 and the source of the transistor D6, and the capacitor C7 is connected between the drain of the transistor D7 and the source of the transistor D8.

The present invention includes a charging process and a discharging process. The charging process includes:
EMC filter: the EMC filter filters high-frequency noise of the grid voltage;
soft start circuit: the soft start circuit limits a charging current of the grid to a DC Bus electrolytic capacitor to implement soft start; the grid-side controller: the grid-side controller controls operating of the relay by detecting the voltage of the DC bus capacitor;
leakage current detection circuit: the leakage current detection circuit does not need to detect the leakage current during charging, and this circuit does not work;
the first power conversion circuit: through high-frequency switching and control of switches, converts an alternating-current (AC) voltage from the grid into a DC voltage, and corrects the input power factor to implement a sinusoidal input current of the grid; the grid-side controller: detects the AC voltage, the current, and the DC side voltage in real time, calculates the duty cycle of the switches, implements closed-loop control on the voltage and current, and monitors whether an overvoltage or overcurrent fault occurs and reports the fault for shutdown;
the second power conversion circuit: firstly, the DC voltage output by the first power conversion circuit is converted to a high-frequency alternating current by performing high-frequency inversion through switches on the primary side, then changes the voltage amplitude and implements electrical isolation through a high-frequency transformer, and finally obtain a DC voltage matched with the power battery of the electric vehicle by performing rectification through switches on the secondary side; the battery-side controller: detects the DC output voltage and current in real time, calculates the duty cycle or switching frequency of the switches, implements closed-loop control on the voltage and current, and monitors whether the overvoltage or overcurrent fault occurs and reports the fault for shutdown, and detects an insulation resistance of a power DC output line;
the main power switch: operates the relay, which transmit the DC voltage obtained from the previous stage to a DC fast charging interface, and may disconnect the charger from the electric vehicle in case of failure; the battery-side controller: controls the operating of the relay; and
the communication controller: communicates with the grid-side controller and the battery-side controller, and communicates with the vehicle, sends a charging instruction of the vehicle to the grid-side controller and the battery-side controller, and receives reported real-time voltage and current data and fault code.

The discharging process includes:
the main power switch: connects the high-voltage battery of the electric vehicle to the second power conversion circuit, and may disconnect the charger from the electric vehicle in case of failure; the battery-side controller: controls operating of the relay;
the second power conversion circuit: firstly, the direct current transmitted from the main power switch is converted to a high-frequency alternating current by performs high-frequency inversion through switches on the secondary side, then changes the voltage amplitude and implements the electrical isolation through the high-frequency transformer, and finally obtains the DC bus voltage by performing rectification through the switches on the primary side, to provide DC input for the first power conversion circuit; the battery-side controller: detects the battery-side voltage and current and the DC output voltage in real time, calculates the duty cycle or switching frequency of the switches, implements the closed-loop control on the output voltage and the battery-side current, and monitors whether the overvoltage or overcurrent fault occurs and reports the fault for shutdown;
the first power conversion circuit: receives the DC voltage output by the second power conversion circuit, and outputs a power frequency sinusoidal voltage through high-frequency switching and control of switches and LC filtering, to supply power to AC electrical equipment; the leakage current detection circuit: detects a common mode current of two AC output wires, and obtains a leakage current after filtering, and reports the leakage current to a system; the grid-side controller: detects the AC output voltage in real time, calculates the duty cycle of the switches, implements the closed-loop control on the AC output voltage, and monitors whether the overvoltage or overcurrent fault occurs and reports the fault for shutdown, and samples the leakage current;
the soft start circuit: operates the relay, to transmit the AC voltage to a next stage of circuit, and may disconnect the system from an AC load in case of failure; the grid-side controller: controls the relays of the soft start circuit;
the EMC filter: filters high-frequency noise of the AC voltage and transmits the voltage to electrical equipment; and
the communication controller: communicates with the grid-side controller, the battery-side controller, and communicates with the vehicle, sends the charging instruction of the vehicle to the grid-side controller and the battery-side controller, and receives the reported real-time voltage and current data and fault code.

### Embodiment 2:

In this embodiment, on the basis of the embodiment 1, the cable connected between the standard plug and the charging control box is removed, and the first port of the charging control box is directly connected to the standard plug that is configured to be connected to the standard socket for supplying power to the charger. In the embodiment 1, there is a cable between the standard plug and the charging control box. During long-term use, the joint between the cable and the standard plug is often twisted or stretched, which causes damage to a rubber coat of the cable, exposes internal wires of the cable, and is prone to electric leakage and shock accidents. Therefore, the standard plug is directly integrated on the charging control box, which can avoid the electric leakage and shock accidents caused by the use of the cable, and achieve the longer service life.

### Embodiment 3:

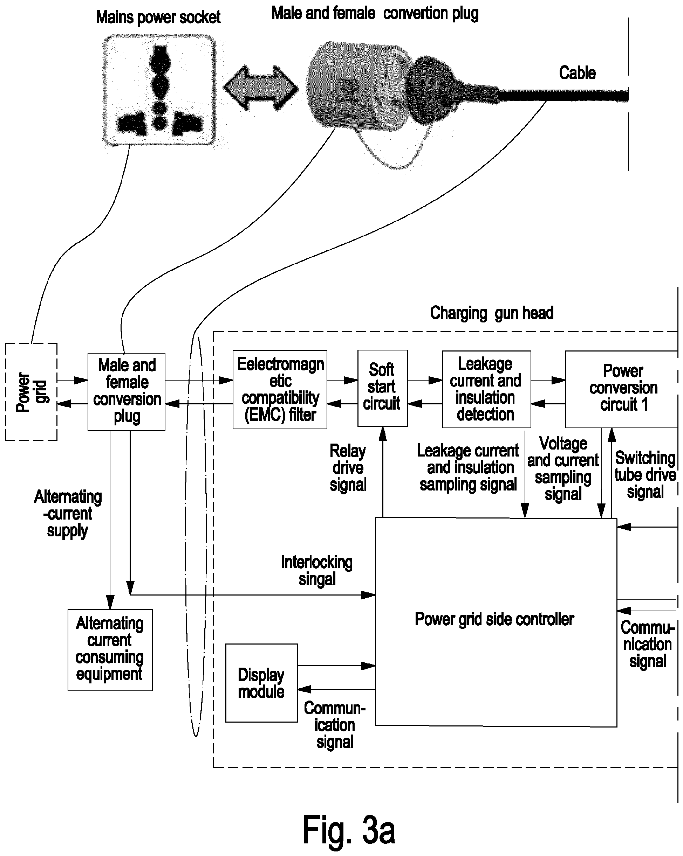

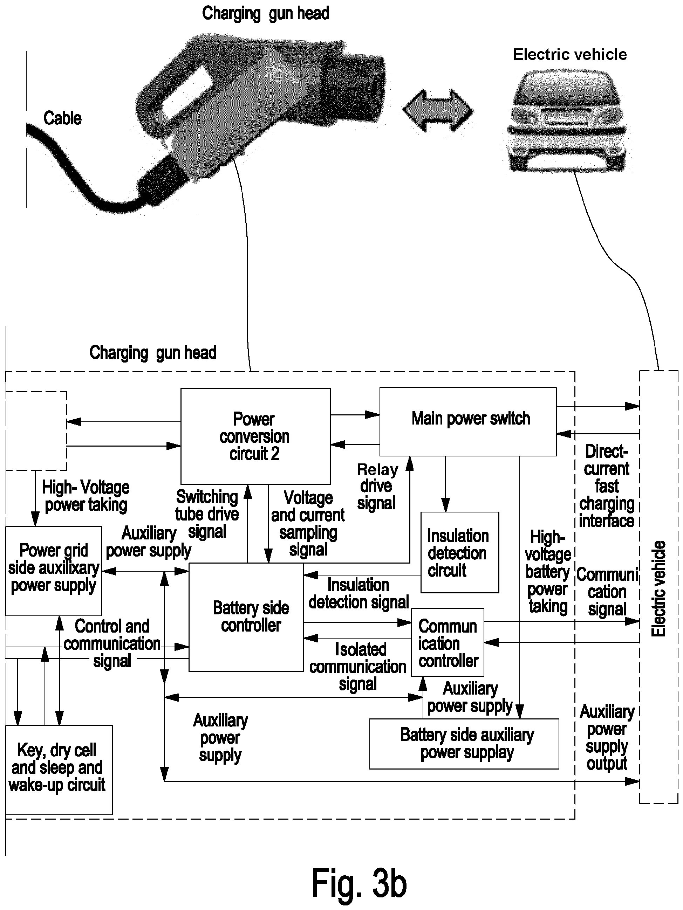

In this embodiment, on the basis of the embodiment 1, according to the present invention, a power conversion apparatus is integrated in the inner space of the charging gun, and the circuit originally located outside the charging gun is moved into the charging gun, so that the inner space of the charging gun is fully utilized, the cost and size are reduced, and the charger is easy to carry. Referring to FIG. 3, a portable electric vehicle charger includes:
a charging gun head, where a fifth port connected to a power plug and a DC power supply port connected to an electric vehicle are arranged on the outer surface of the charging gun head, an EMC filter, a soft start circuit, a PFC inductor, a first power conversion circuit, a second power conversion circuit, and a main power switch connected in sequence are arranged inside the charging gun head, the fifth port is connected to the EMC filter, the main power switch is connected to the DC power supply port connected to the electric vehicle, the soft start circuit and the first power conversion circuit are electrically connected to a grid-side controller, the second power conversion circuit and the main power switch are electrically connected to a battery-side controller, and the grid-side controller is in communication connection with the battery-side controller;
a cable, configured to connect the power plug and the fifth port, and internally containing a power connecting line; and
a power plug, configured to be connected to a standard socket that connected to the grid. The power plug is a male and female conversion plug; when the charger performs forward charging, the male and female conversion plug is converted into a male plug to be connected to the standard socket connected to the grid to provide an alternating-current voltage; and when the charger performs backward discharging, the male and female conversion plug is converted into a female socket to be connected to a power supply plug of external alternating-current electrical equipment. A leakage current and insulation detection circuit and an insulation detection circuit are arranged inside the charging gun head, the leakage current and insulation detection circuit is connected between the soft start circuit and the first power conversion circuit, the insulation detection circuit is connected to the main power switch, the leakage current and insulation detection circuit is electrically connected to the grid-side controller, and the insulation detection circuit is electrically connected to the battery-side controller. The charging gun head externally contains control keys configured to control start, charging stop, and discharging stop of the charger.

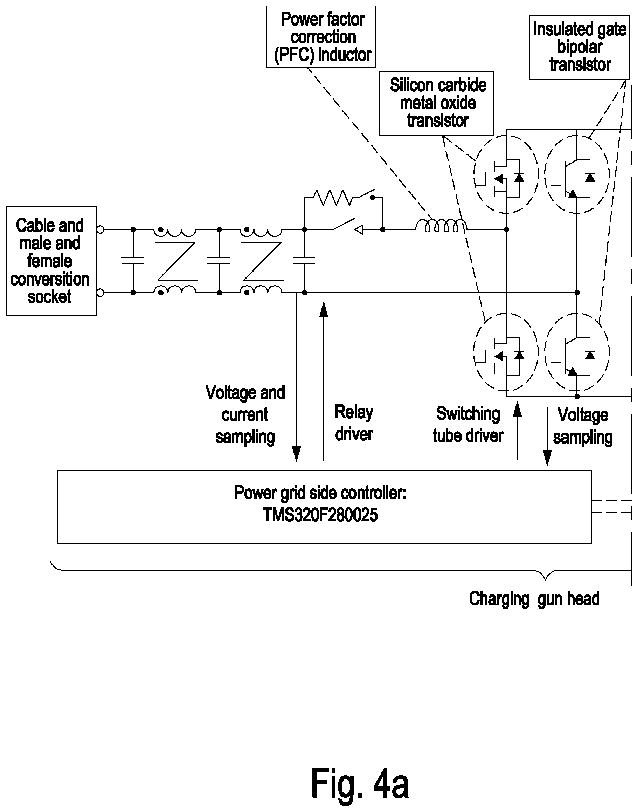

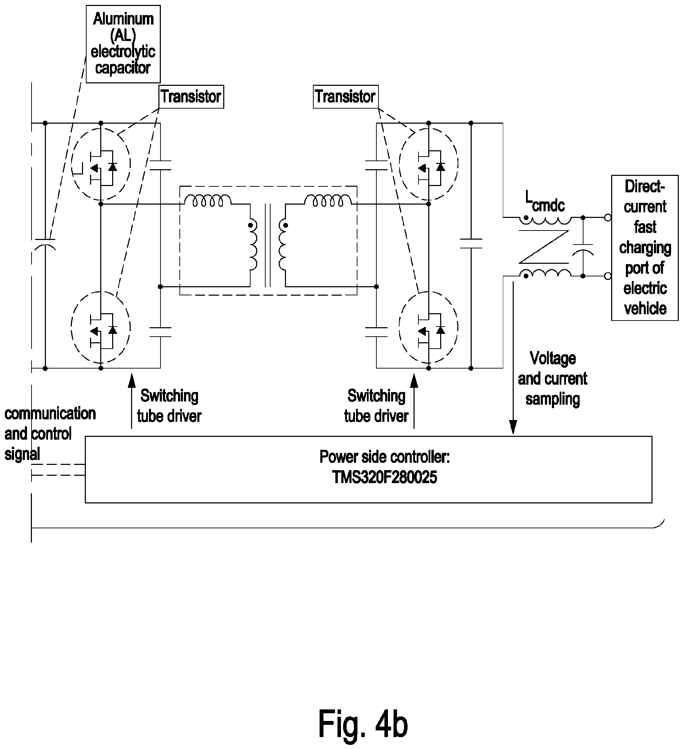

The specific circuit connection in this embodiment refers to FIG. 4. The model number of the grid-side controller is TMS320F280025. The model number of the battery-side controller is TMS320F280025. The first power conversion circuit includes two SiC MOSs, the model number of which is C3M0120065K, two IGBTs, the model number of which is GRW60TS65EHR, and one AL electrolytic capacitor, the model number of which is 450V 120uF 8pcs. The second power conversion circuit includes four transistors, the model number of which is IPW65R041CFD7, and one isolated inductor. Compared to that in the embodiment 1, the specific circuit connection in this embodiment is free of the cable, and other detailed connection relationships refer to FIG. 3 for analogy and will not be repeated.

## Claims

1. A portable electric vehicle charger, comprising:
a charging control box, wherein a first port connected to the grid and a second port connected to a charging gun head are arranged on the outer surface of the charging control box, an EMC filter connected to the first port is arranged inside the charging control box, the EMC filter is connected to a first power conversion circuit, and the first power conversion circuit is electrically connected to a grid-side controller, controlled by the grid-side controller, and configured to convert and control an alternating-current voltage from the grid;
a charging gun head, wherein a third port connected to the charging control box and a fourth port for supplying DC power connected to an electric vehicle are arranged on the outer surface of the charging gun head, a second power conversion circuit connected to the third port and an insulation detection circuit connected to the second power conversion circuit are arranged inside the charging gun head, the second power conversion circuit and the insulation detection circuit are electrically connected to a battery-side controller, and the second power conversion circuit is controlled by the battery-side controller and configured to output a DC voltage or current matched with a battery voltage of the electric vehicle; and
a cable, configured to connect the second port and the third port, wherein the cable internally contains a power connecting line configured to connect the first power conversion circuit and the second power conversion circuit, and a signal connecting line configured for communication between the grid-side controller and the battery-side controller.

2. The portable electric vehicle charger according to claim 1, wherein a soft start circuit is arranged inside the charging control box and connected between the EMC filter and the first power conversion circuit, and a main power switch is arranged inside the charging gun head, connected between the second power conversion circuit and the fourth port, and electrically connected to the battery-side controller.

3. The portable electric vehicle charger according to claim 2, wherein a leakage current and insulation detection circuit is arranged inside the charging control box, connected between the soft start circuit and the first power conversion circuit, and electrically connected to the grid-side controller.

4. The portable electric vehicle charger according to claim 1, wherein the charging control box externally contains control keys configured to control start, charging stop, and discharging stop of the charger.

5. The portable electric vehicle charger according to claim 1, wherein the first port of the charging control box is connected to a standard plug via the cable, and the standard plug is configured to be connected to a standard socket for supplying power to the charger.

6. The portable electric vehicle charger according to claim 1, wherein the first port of the charging control box is connected to a standard plug that is configured to be connected to a standard socket for supplying power to the charger.

7. A portable electric vehicle charger, comprising:
a charging gun head, wherein a fifth port connected to a power plug and a DC power supply port connected to an electric vehicle are arranged on the outer surface of the charging gun head, an EMC filter, a soft start circuit, a first power conversion circuit, a second power conversion circuit, and a main power switch connected in sequence are arranged inside the charging gun head, the fifth port is connected to the EMC filter, the main power switch is connected to the DC power supply port connected to the electric vehicle, the soft start circuit and the first power conversion circuit are electrically connected to a grid-side controller, the second power conversion circuit and the main power switch are electrically connected to a battery-side controller, and the grid-side controller is in communication connection with the battery-side controller;
a cable, configured to connect the power plug and the fifth port, and internally contains a power connecting line; and
a power plug, configured to be connected to a standard socket connected to the grid.

8. The portable electric vehicle charger according to claim 7, wherein the power plug is a male and female conversion plug; when the charger performs forward charging, the male and female conversion plug is converted into a male plug to be connected to the standard socket connected to the grid to provide an alternating-current voltage; and when the charger performs backward discharging, the male and female conversion plug is converted into a female socket to be connected to a power supply plug of external alternating-current electrical equipment.

9. The portable electric vehicle charger according to claim 7, wherein a leakage current and insulation detection circuit and an insulation detection circuit are arranged inside the charging gun head, the leakage current and insulation detection circuit is connected between the soft start circuit and the first power conversion circuit, the insulation detection circuit is connected to the main power switch, the leakage current and insulation detection circuit is electrically connected to the grid-side controller, and the insulation detection circuit is electrically connected to the battery-side controller.

10. The portable electric vehicle charger according to claim 7, wherein the charging gun head externally contains control keys configured to control start, charging stop, and discharging stop of the charger.
